# EUROPEAN PATENT APPLICATION

(11) **EP 4 297 384 A1**
(43) Date of publication of application: **27.12.2023**
(21) Application number: 22774068.5
(22) Date of filing: 14.03.2022
(51) Int. Cl.: H04M 1/72406

(54) **HOT EVENT PRESENTATION METHOD FOR APPLICATION, AND ELECTRONIC DEVICE**

(30) Priority: 23.03.2021 CN 202110309047
(71) Applicant: Beijing Zitiao Network Technology Co., Ltd., Beijing 100190 (CN)
(72) Inventor: FANG, Mengying, Beijing 100190 (CN); LI, Zeyu, Beijing 100190 (CN)
(74) Representative: Dentons UK and Middle East LLP
(86) International application number: PCT/CN2022/080541
(87) International publication number: WO 2022/199406

(57) **Abstract**

The present disclosure relates to a hot event presentation method for an application, and an electronic device. The method comprises: playing multimedia content, in an application, of a first hot event; receiving a sliding operation on the multimedia content; and in response to the sliding operation, displaying, in a first region of a first page, one piece of viewpoint content of the first hot event, and displaying, in a second region of the first page, comment content of the first hot event in a scrolling manner, wherein the first page is a page of the application, and the first region and the second region are different. Thus, the problems of in an existing hot event discussion scenario, the presentation of content being simplistic and the value of consumption being limited are solved, discussion content in a hot comment inner-flow page is enriched, and the value of consumption of the hot comment inner-flow page is improved.

## Description

This application claims the benefit of Chinese patent application No. 202110309047.6, entitled "METHOD FOR DISPLAYING TRENDING EVENT IN APPLICATION AND ELECTRONIC DEVICE", filed on March 23, 2021 with the China National Intellectual Property Administration, which is incorporated herein by reference in its entirety.

### FIELD

The present disclosure relates to the field of Internet technology, and in particular to a method for displaying a hot event (also referred to as "trending event") in an application and an electronic device.

### BACKGROUND

With the continuous development of Internet technology, an application (APP) often selectively displays hot events (also referred to as "trending events") that attract widespread attention and spark heated discussions or strong reactions in society.

However, there is an urgent need to solve the problem of how to display hot events in the application so that users can understand hot events in detail and interact with respect to the hot events in depth.

### SUMMARY

In order to solve the above technical problem or at least partially solve the above technical problem, a method for displaying a trending event in an application, and an electronic device are provided according to the present disclosure.

In a first aspect, a method for displaying a trending event in an application is provided according to the present disclosure. The method includes:
playing a multimedia content of a first trending event in the application;
receiving a sliding operation performed for the multimedia content; and
in response to the sliding operation, displaying a viewpoint content about the first trending event in a first region of a first page, and scrolling comment contents about the first trending event in a second region of the first page, where the first page is a page of the application, and the first region is different from the second region.

With the method according to the first aspect, in a hot discussion internal flow page of an application, a region may be used to display a collection of notable viewpoints about a trending event, and another region may be used to display hot comments about the trending event, so that a user can know in-depth discussion viewpoint about the current trending event in detail while viewing comment pop-ups. Thus, the problems of un-diversified content display and limited consumption value in the existing discussion scene of the trending event are solved, discussion in the hot discussion internal flow page is enriched, and a consumption value of the hot discussion internal flow page is improved. Moreover, after improving the consumption value, a trending topic consumption path of "user browsing a trending event to user watching notable viewpoints to user participating in hot discussion" is gradually established.

In a possible design, the method further includes: in response to receiving a sliding operation on the first region or in response to passing a preset time period, switching, in the first region, from displaying the viewpoint content about the first trending event to displaying another viewpoint content about the first trending event.

In a possible design, the displaying a viewpoint content about the first trending event includes: displaying the viewpoint content about the first trending event in a form of a card.

In a possible design, the method further includes: displaying a first numerical value and a second numerical value in the first region, where the first numerical value represents the total number of viewpoint contents about the first trending event that are allowed to be displayed in the first region, and the second numerical value represents a numbering of the viewpoint content about the first trending event being displayed in the first region among viewpoint contents in quantity equal to the first numerical value.

In a possible design, the viewpoint content about the trending event is obtained from another application associated with the application.

In a possible design, the method further includes: displaying a second page of the application in response to receiving a trigger operation on the first region, where the second page displays viewpoint contents about the first trending event that are allowed to be displayed in the first region.

In a possible design, the method further includes: displaying a page of another application in response to receiving a trigger operation on the second page.

In a possible design, the viewpoint content about the trending event is displayed in form of text and/or picture.

In a possible design, the displaying a viewpoint content about the first trending event includes: displaying part of the text of the viewpoint content about the first trending event; or displaying the text of the viewpoint content about the first trending event; or displaying part of the pictures of the viewpoint content about the first trending event; or displaying the pictures of the viewpoint content about the first trending event; or displaying part of the text and part of the pictures of the viewpoint content about the first trending event; or displaying part of the text and the pictures of the viewpoint content about the first trending event; or displaying the text and part of the pictures of the viewpoint content about the first trending event; or displaying the text and the pictures of the viewpoint content about the first trending event.

In a possible design, the method further includes: displaying a third page of the application in response to receiving a trigger operation on the second region, where the third page displays comment contents about the first trending event that are allowed to be displayed in the second region.

In a possible design, the method further includes: in response to receiving an input operation on the second region, inputting and displaying a comment content of a user about the first trending event in the second region .

In a possible design, the scrolling comment contents about the first trending event in a second region includes: displaying a comment title of the first trending event at a top position of the second region, and scrolling multiple comment contents about the first trending event from remaining positions of the second region except the top position.

In a possible design, once the number of comment contents about the first trending event exceeds a preset threshold, the method further includes: cancelling the displaying of the comment title of the first trending event at the top position of the second region, and scrolling the multiple comment contents about the first trending event from the top position of the second region.

In a possible design, the scrolling comment contents about the first trending event in a second region of the first page includes: when displaying one viewpoint content about the first trending event in the first region, scrolling, in the second region of the first page, the comment contents about the first trending event related to the one viewpoint content about the first trending event.

In a possible design, the comment content about the trending event is obtained from a comment content about the multimedia content of the trending event.

In a possible design, the method further includes: playing another multimedia content of the first trending event or playing a multimedia content of a second trending event in response to receiving a sliding operation on the first page.

In a second aspect, an electronic device is provided according to the present disclosure. The electronic device includes a memory and a processor. The memory is configured to store program instructions. The processor is configured to call the program instructions in the memory to cause the electronic device to perform the method for displaying the trending event in the application according to the first aspect and any possible design in the first aspect.

In a third aspect, a computer storage medium storing computer instructions is provided according to the present disclosure. The computer instructions, when executed on an electronic device, cause the electronic device to perform the method for displaying the trending event in the application according to the first aspect and any possible design in the first aspect.

In a fourth aspect, a computer program product is provided according to the present disclosure. The computer program product, when executed on a computer, causes the computer to perform the method for displaying the trending event in the application according to the first aspect and any possible design in the first aspect.

### BRIEF DESCRIPTION OF THE DRAWINGS

The drawings herein are incorporated into the specification and constitute a part of the specification. The drawings show embodiments of the present disclosure. The drawings and the specification are used to explain the principle of the present disclosure.

In order to more clearly explain the embodiments of the present disclosure or the technical solutions in the conventional art, the drawings used in the description of the embodiments or the conventional art are briefly introduced below. Apparently, for those skilled in the art, other drawings can be obtained according to the provided drawings without any creative effort.
Figures 1A to 1H are example diagrams of human-computer interaction interfaces according to the embodiments of the present disclosure; and
Figure 2 is an example flowchart of a method for displaying a trending event in an application according to an embodiment of the present disclosure.

### DETAILED DESCRIPTION OF EMBODIMENTS

In order to understand the above objects, features and advantages of the present disclosure more clearly, the solutions of the present disclosure are further described hereinafter. It should be noted that the embodiments of the present disclosure and the features in the embodiments can be combined with each other if there is no conflict.

In the following description, numerous specific details are set forth in order to provide thorough understanding of the present disclosure. However, the present disclosure may also be implemented in other ways different from those described here. Obviously, the embodiments in the specification are only a part of the embodiments of the present disclosure, rather than all the embodiments.

As an example, a method, an apparatus, a device, a computer storage medium and a computer program product for displaying a trending event in an application are provided according to the present disclosure. A hot discussion internal flow page is configured in the application. A region in the hot discussion internal flow page is used to display a collection of notable viewpoints about the trending event, and another region in the hot discussion internal flow page may be used to display hot comments about the trending event, to realize the integration of the viewpoint contents and comment contents about the current trending event. Thus, a user can know in-depth discussion viewpoints about the current trending event in detail while viewing comment pop-ups.

The method for displaying the trending event in the application according to the present disclosure is executed by an electronic device. The electronic device may be a tablet computer, a mobile phone (such as a folding screen mobile phone or a large screen mobile phone), a wearable device, a vehicle-mounted device, an augmented reality (AR)/virtual reality (VR) device, a notebook computer, an ultra-mobile personal computer (UMPC), a netbook, a personal digital assistant (PDA), or an internet of things (IOT) device such as a smart TV, a smart screen, a high-definition TV, a 4K TV, a smart speaker, a smart projector or the like, which is not limited in the present disclosure.

A type of an operating system of the electronic device is not limited in the present disclosure, such as an Android^{™} system, a Linux^{™} system, a Windows^{™} system and an iOS^{™} system.

Based on the foregoing description, a method for displaying a trending event in an application according to the present disclosure is elaborated in connection with the drawings and application scenarios by taking an electronic device as an example.

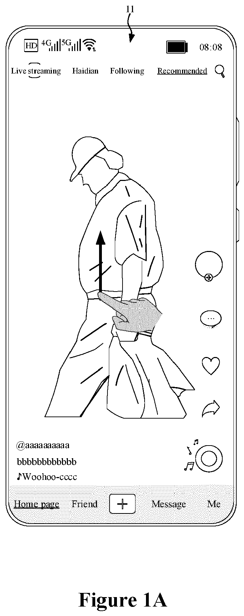

An implementation of the method for displaying the trending event in the application according to the present disclosure is introduced in conjunction with Figures 1A to 1H.

For convenience of explanation, Figures 1A to 1H are described by taking an example in which an electronic device is a mobile phone, a short video social APP 1 (referred to as an application 1) is installed in the mobile phone, contents related to a trending event 1 such as a multimedia content 1, a hot comment internal flow page and a multimedia content 2 may be played in the application 1, and a multimedia content related to a trending event 2 such as a multimedia content 3 may also be played in the application 1. The trending event 1 is different from the trending event 2.

Reference may be made to Figures 1A to 1H, which are schematic diagrams of human-computer interaction interfaces according to the embodiments of the present disclosure.

For an application 1, a user interface 11 exemplarily shown in Figure 1A may be displayed on the mobile phone. The user interface 11 is used to display a page of the application 1, and a set of functions such as multimedia (such as short video) playing may be executed in the page of the application 1.

### 1. Access a multimedia content 1 of a trending event 1 by a sliding operation

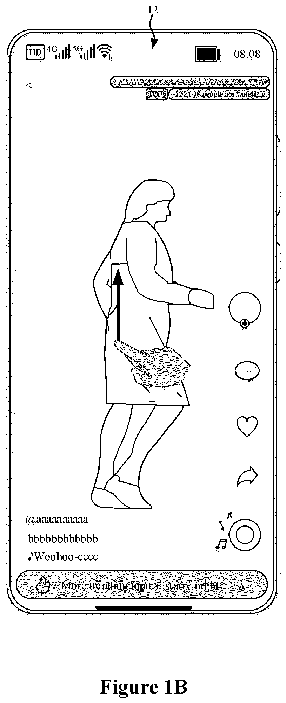

For the application 1, in response to receiving a sliding operation of a user in the user interface 11 shown in Figure 1A, a user interface 12 exemplarily shown in Figure 1B may be displayed on the mobile phone, and the user interface 12 is used to display the multimedia content 1 of the trending event 1 in the application 1.

### 2. Switch to a hot comment internal flow page of the trending event 1 by a sliding operation.

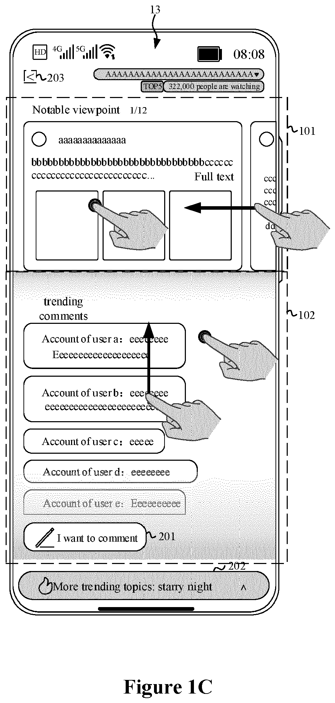

For the application 1, in response to receiving a sliding operation of the user in the user interface 12 shown in Figure 1B, a user interface 13 exemplarily shown in Figure 1C may be displayed on the mobile phone, and the user interface 13 is used to display the hot comment internal flow page of the trending event 1 in the application 1.

The user interface 13 may include a region 101 and a region 102. A location, an area, a shape, a background color and other parameters of the region 101 and the region 102 are not limited in the present disclosure. For example, the region 101 is located at the top portion of the user interface 13, and the region 102 is located below the region 101.

The region 101 is used to display viewpoint contents related to the trending event 1. The viewpoint contents related to the trending event 1 (such as a viewpoint content 1 and a viewpoint content 2) are obtained from contents in other applications associated with the application 1 (such as an applet or a web page in the application 1), such as hot discussion contents with the number of comments greater than a preset threshold.

The preset threshold may be set based on actual situations. A display mode of the viewpoint contents related to the trending event 1 is not limited in the present disclosure. In some embodiments, a horizontally sliding content component may be set in the region 101, in which the viewpoint content about the trending event 1 is displayed, and in response to a sliding operation or in response to passing a preset time period, the application 1 switches to another viewpoint content about the trending event 1. In this way, the viewpoint contents related to the trending event 1 are displayed, and switching of the viewpoint contents related to the trending event 1 may be achieved by manual or automatic sliding.

The sliding operation may be a left sliding operation, a right sliding operation, an upward sliding operation and a downward sliding operation, which is not limited in the present disclosure.

Moreover, the viewpoint content about the trending event 1 currently displayed in the component may be displayed in form of picture and/or text. Thus, the component may display part or all of the text in the viewpoint content about the trending event 1. Alternatively, the component may display part or all of the pictures in the viewpoint content about the trending event 1. Alternatively, the component may display part of the text and part of the pictures in the viewpoint content about the trending event 1. Alternatively, the component may display part of the text and all of the pictures in the viewpoint content about the trending event 1. Alternatively, the component may display all of the text and part of the pictures in the viewpoint content about the trending event 1. Alternatively, the component may display all of the text and all of the pictures in the viewpoint content about the trending event 1.

Moreover, the viewpoint content about the trending event 1 may be displayed in the component in a form of a card. A display mode of the card is not limited in the present disclosure. For example, when performing sliding operation, a card corresponding to another viewpoint content about the trending event 1 may be automatically attached to a center portion of the mobile phone screen, and the card may be highlighted.

Since one viewpoint content about the trending event 1 may be in a massive volume while the region 101 has limited space, the viewpoint content about the trending event 1 cannot be completely displayed in the card. Therefore, the viewpoint content about the trending event 1 may be displayed in the component in an abbreviated manner, i.e., a part of the viewpoint content about the trending event 1 is displayed. For example, for one viewpoint content about the trending event 1, at most 3 lines of text are displayed, and at most 3 pictures are displayed. Moreover, after being displayed in the abbreviated manner, a guide to "full text" may be added to the text. In addition, the region 101 is also used to display a title of the trending event 1, the total number of viewpoint contents allowed to be displayed in the region 101, and numbering of the viewpoint content currently displayed in the region 101 among the total number.

Moreover, the region 101 is also used to jump to a page (referred to as an aggregation page). The aggregation page may include all viewpoint contents related to the trending event 1 in the quantity equal to the total number, so that all viewpoint contents may be displayed to the user by the aggregation page. In addition, re-comments are not allowed in the aggregation page. The aggregation page allows jumping to a page of another application associated with the application 1, which is convenient for the user to browse related contents in the another application associated with the application 1 and re-comment in the another application associated with the application 1.

The region 102 is used to display comment contents related to the trending event 1. The comment contents are obtained from comment contents in multimedia contents (such as a multimedia content 1 and a multimedia content 2) related to the trending event 1, such as a hot comment content with the number of "likes" greater than a preset threshold, or a hot comment content with the number of comments greater than a preset threshold. The preset threshold may be set based on actual situations. A display mode of the comment content related to the trending event 1 is not limited in the present disclosure. In some embodiments, in the region 102, the comment contents related to the trending event 1 may be set to be auto-scrolled. The number and specific content of the comment contents in the region 102 are not limited in the present disclosure. For example, each comment content may include an ID of a commentator and a specific content.

In addition, the region 102 is used to display a comment title of the trending event 1. A specific content and a location of the comment title of the trending event 1 are not limited in the present disclosure. In some embodiments, the comment title of the trending event 1 may be displayed at a top position of the region 102.

In Figure 1C, for the application 1, the comment title of the trending event 1 may be displayed at the top position of the region 102, and the comment contents related to the trending event 1 may be scrolled at remaining positions of the region 102 except the top position.

With the continuous display of the comment contents related to the trending event 1, in a case that the number of comment contents exceeds a preset threshold, for the application 1, the displaying of the comment title of the trending event 1 at the top position of the region 102 may be cancelled, and the comment contents related to the trending event 1 may be scrolled from the top position of the region 102. The preset threshold may be set based on a size of the region 102 and the actual situation, so that the user can browse as many comments as possible.

Moreover, the region 102 may include an input box 201 which allows the user to input a comment content. Thus, for the application 1, an ID of the user and the comment content input by the user may be displayed in the region 102.

In addition, the region 102 is further used to jump to a page (referred to as a comment page). The comment page may include all comment contents in the region 102, so that all comment contents may be displayed to the user by the comment page.

Furthermore, the user interface 13 may further include a control 202, which is used to receive a click operation and display a window in response to receiving the click operation. The window may include trending events provided by the application 1 except the trending event 1, so as to facilitate the user to browse other trending events.

Furthermore, the user interface 13 may further include a control 203, a title of the trending event 1, a ranking of the trending event 1 among all the current trending events, and the number of viewers of the trending event 1. The control 203 is used to exit the user interface 13.

In Figure 1C, for the application 1, the viewpoint content 1 of the trending event 1 may be displayed in the form of the card in the region 101 fixed at the top portion, and the related comment contents may be automatically scrolled and displayed in the region 102.

### 3. Switch the viewpoint contents related to the trending event 1 by sliding operations

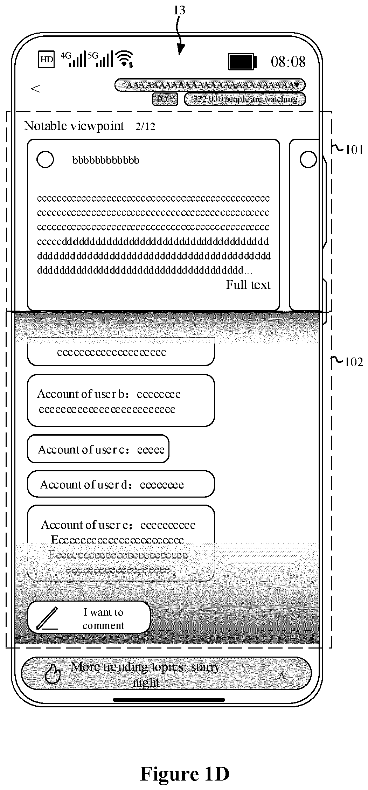

In response to determining a preset time period has passed or in response to receiving a sliding operation of the user in the region 101 shown in Figure 1C, for the application 1, it is possible to switch, in the region 101, from displaying the viewpoint content 1 of the trending event 1 exemplarily shown in Figure 1C to displaying the viewpoint content 2 of the trending event 1 exemplarily shown in Figure 1D.

In addition, for the application 1, it is possible to switch, in the region 101, from displaying the numbering of the viewpoint content 1 exemplarily shown in Figure 1C to displaying the numbering of the viewpoint content 2 exemplarily shown in Figure 1D.

4. Access the viewpoint contents related to the trending event 1 (i.e. the aggregation page) by a click operation

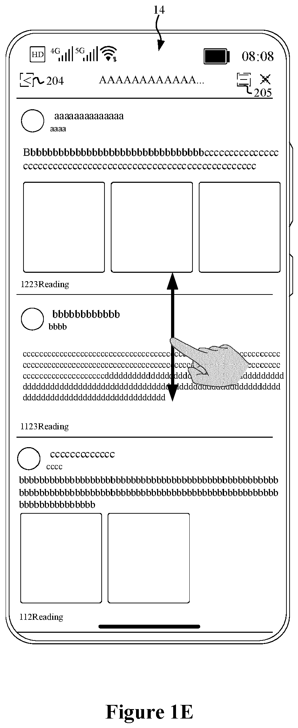

For the application 1, in response to receiving a click operation of the user in the region 101 shown in Figure 1C, a user interface 14 exemplarily shown in Figure 1E may be displayed on the mobile phone, and the user interface 14 (i.e., the aggregation page) displays viewpoint contents related to the trending event 1 in the quantity equal to the total number in the. The total number is discussed in the previous description and is not repeated here.

If there are too many viewpoint contents related to the trending event 1 in the user interface 14, remaining viewpoint contents in the user interface 14 may be displayed in the application 1 on the mobile phone in response to receiving an upward sliding operation or a downward sliding operation of the user in the user interface 14 shown in Figure 1E.

In addition, the user interface 14 may further include a control 204, which is used to exit the user interface 14 and jump to the user interface 13.

In addition, the user interface 14 may further include a control 205, which is used to access a page of another application associated with the application 1. A shape, a size, a background color and other parameters of the control 205 are not limited in the present disclosure.

For the application 1, in response to receiving an operation of the user of clicking the control 205 in the user interface 14 shown in Figure 1E, a page of another application associated with the application 1 may be displayed on the mobile phone.

### 5. Access the comment contents related to the trending event 1 (i.e. the comment page) by a click operation

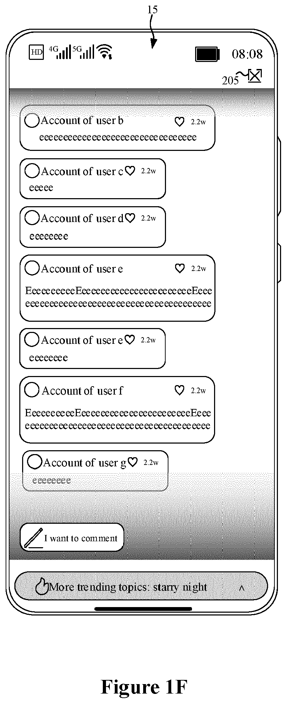

For the application 1, in response to receiving a click operation of the user in the region 102 shown in Figure 1C, a user interface 15 exemplarily shown in Figure 1F may be displayed on the mobile phone, and the user interface 15 (i.e., the comment page) displays comment contents related to the trending event 1 in the application 1. Each comment content may be displayed in the user interface 15 in an automatic sliding manner.

A display mode of the comment contents in the user interface 15 is not limited in the present disclosure. For example, each comment content may include an ID of the user, a comment content input by the user and the number of "likes" to the comment content. In addition, the user interface 15 allows the user to input a comment content, so that for the application 1, the comment content input by the user may be displayed in the user interface 15.

In addition, the user interface 15 may further include a control 205, which is used to exit the user interface 15 and jump to the user interface 13.

### 6. Switch to a multimedia content 2 of the trending event 1 or a hot comment internal flow page of a trending event 2 by a sliding operation

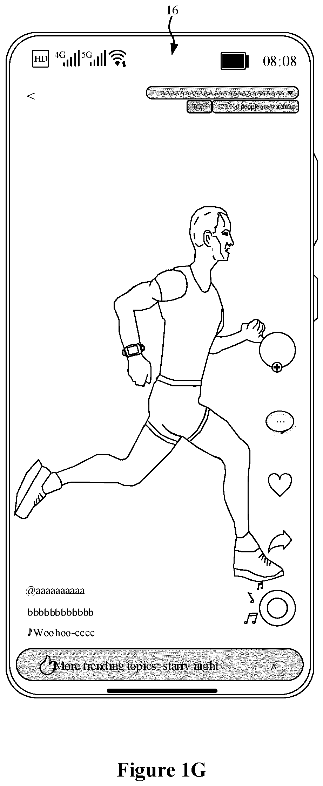

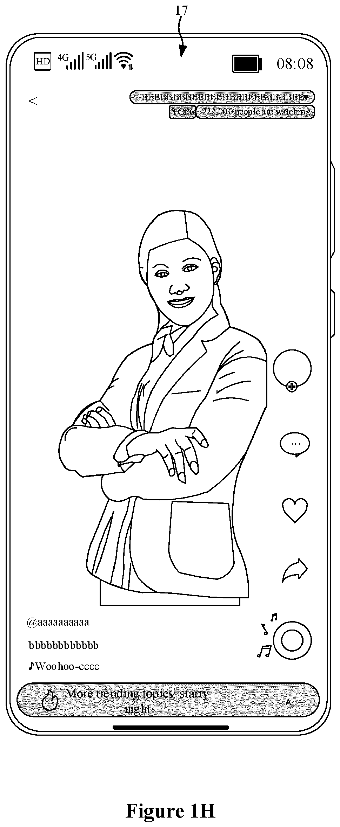

For the application 1, in response to receiving a sliding operation of the user in the user interface 13 shown in Figure 1C, a user interface 16 exemplarily shown in Figure 1G may be displayed on the mobile phone, and the user interface 16 is used to display the multimedia content 2 of the trending event 1 in the application 1. Alternatively, a user interface 17 exemplarily shown in Figure 1H may be displayed on the mobile phone, and the user interface 17 is used to display a multimedia content 3 of the trending event 2 in the application 1.

For specific implementations of the user interface 16 or the user interface 17, reference may be made to the description of the user interface 12 in Figure 1B, which is not repeated here.

It should be noted that the user interface 13 may be displayed at, except the position of following the multimedia content 1 in the trending event 1, other positions in the contents related to the trending event 1, such as positions following the multimedia content 1 and the multimedia content 2 in the trending event 1. A specific position of the user interface 13 and the number of user interfaces corresponding to the contents related to the trending event 1 are not limited in the present disclosure.

In conclusion, in a hot discussion internal flow page of an application, a region may be used to display a collection of notable viewpoints about a trending event, and another region may be used to display hot comments about the trending event, so that a user can know in-depth discussion viewpoint about the current trending event in detail while viewing comment pop-ups. Thus, the problems of un-diversified content display and limited consumption value in the existing discussion scene of the trending event are solved, discussion in the hot discussion internal flow page is enriched, and a consumption value of the hot discussion internal flow page is improved. Moreover, after improving the consumption value, a trending topic consumption path of "user browsing a trending event to user watching notable viewpoints to user participating in hot discussion" is gradually established.

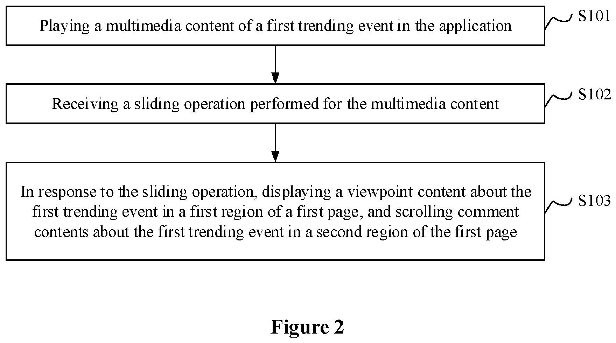

An implementation of a method for displaying a trending event in an application according to the present disclosure is described in detail based on the description of the embodiments in Figures 1A to 1H and in combination with Figure 2.

Reference may be made to Figure 2, which is a schematic flowchart of a method for displaying a trending event in an application according to an embodiment of the present disclosure. As shown in Figure 2, the method for displaying the trending event in the application according to the present disclosure may include the following steps S101 to S 103.

S101, playing a multimedia content of a first trending event in the application.

After starting the application, the electronic device may play the multimedia content of the first trending event in the application. The type of the application and the type and content of the multimedia content of the first trending event are not limited in the present disclosure. For example, the application may be the application 1 in Figures 1A to 1H, and the multimedia content of the first trending event may be the multimedia content 1 of the trending event 1 displayed on the user interface 12 in the embodiment of Figure 1B.

S102, receiving a sliding operation performed for the multimedia content.

When playing the multimedia content of the first trending event, the electronic device may receive the sliding operation of the user perform for the multimedia content. The sliding operation may include, but is not limited to, an upward sliding operation, a downward sliding operation, a left sliding operation, a right sliding operation and other types of operations. For example, the sliding operation is the sliding operation performed by the user in the user interface 12 shown in Figure 1B.

In S103, in response to the sliding operation, displaying a viewpoint content about the first trending event in a first region of a first page, and scrolling comment contents about the first trending event in a second region of the first page.

In response to receiving the sliding operation, the electronic device may display the viewpoint content about the first trending event in the first region of the first page, and scroll the comment contents about the first trending event in the second region of the first page.

Thus, the user can know in-depth discussion viewpoints about the current trending event in detail while viewing comment pop-ups, which enriches discussion in the hot discussion internal flow page and improves consumption value of the hot discussion internal flow page.

The first page is a page of the application, such as the hot comment internal flow page of the trending event 1 displayed by the user interface 13 in the embodiment of Figure 1C. The position of the first page is not limited in the present disclosure. For example, the first page may immediately follow the multimedia content(s) of the first trending event in S101, or may be subsequent to several pages following the multimedia content(s) of the first trending event in S101.

Based on the current actual situation, the electronic device regards events that attract widespread attention and spark heated discussions or strong reactions in society as the trending events. The viewpoint contents about the trending event are obtained from other applications associated with the application (such as an applet or a web page in the application). The comment contents about the trending event are obtained from comment contents about the multimedia content of the trending event.

A display mode of the viewpoint content about the trending event is not limited in the present disclosure. In some embodiments, the viewpoint content about the trending event is displayed in form of text and/or picture. For example, the electronic device may display part or all of the text in the viewpoint content about the first trending event. Alternatively, the electronic device may display part or all of the pictures in the viewpoint content about the first trending event. Alternatively, the electronic device may display part of the text and part of the pictures in the viewpoint content about the first trending event. Alternatively, the electronic device may display part of the text and all of the pictures in the viewpoint content about the first trending event. Alternatively, the electronic device may display all of the text and part of the pictures in the viewpoint content about the first trending event. Alternatively, the electronic device may display all of the text and part of the pictures in the viewpoint content about the first trending event.

The first region is used to display the viewpoint contents related to the first trending event that may be discussed in depth, which may include, but is not limited to, one viewpoint content about the first trending event. For example, the first region is the region 101 displayed by the user interface 13 in the embodiment of Figure 1C, and one viewpoint content about the first trending event is the viewpoint content 1 of the trending event 1 displayed in the region 101 in the embodiment of Figure 1C.

The second region is used to display the comment contents related to the first trending event for which there have been heated discussions, which may include, but is not limited to, a comment content about the first trending event. For example, the second region is the region 102 displayed by the user interface 13 in the embodiment of Figure 1C.

Moreover, the first region is different from the second region. A position, a size, a shape, a background color and other parameters of the first region and the second region are not limited in the present disclosure. For example, the first region is located above the second region.

With the method for displaying the trending event in the application according to the present disclosure, in a hot discussion internal flow page of the application, a region may be used to display a collection of notable viewpoints about the trending event, and another region may be used to display hot comments about the trending event, so that a user can know in-depth discussion viewpoints about the current trending event in detail while viewing comment pop-ups. Thus, the problems of un-diversified content display and limited consumption value in the existing discussion scene of the trending event are solved, discussion in the hot discussion internal flow page is enriched, and a consumption value of the hot discussion internal flow page is improved. Moreover, after improving the consumption value, a trending topic consumption path of "user browsing a trending event to user watching notable viewpoints to user participating in hot discussion" is gradually established.

Based on the above description, other viewpoint contents except the one viewpoint content about the first trending event may be displayed in the first region. In some embodiments, in response to receiving a sliding operation on the first region or in response to passing a preset time period, the electronic device may switch, in the first region, from displaying one viewpoint content about the first trending event to displaying another viewpoint content about the first trending event. Therefore, the electronic device may display the viewpoint contents related to the first trending event by the first region.

The sliding operation on the first region may include, but is not limited to, an upward sliding operation, a downward sliding operation, a left sliding operation or a right sliding operation. For example, the sliding operation on the first region is the sliding operation of the user in the region 101 shown in Figure 1C.

Another viewpoint content about the first trending event is different from the viewpoint content about the first trending event, but both of them are related to the first trending event. For example, another viewpoint content about the first trending event is the viewpoint content 2 of the trending event 1 displayed in the region 101 in the embodiment of Figure 1D.

The preset time period is not limited in the present disclosure.

To sum up, the electronic device may manually or automatically switch among the viewpoint contents related to the trending event.

In addition, the viewpoint content about the trending event displayed in the first region may be related to the comment content about the trending event displayed in the second region.

Thus, in S103, in a case of displaying one viewpoint content about the first trending event in the first region, a comment content about the first trending event related to the one viewpoint content about the first trending event is displayed in the second region. The comment content about the first trending event related to the one viewpoint content about the first trending event may be understood as user comments on the one viewpoint content about the first trending event.

In a case of displaying another viewpoint content about the first trending event in the first region, the comment content about the first trending event related to the another viewpoint content about the first trending event is displayed in the second region. The comment content about the first trending event related to the another viewpoint content about the first trending event may be understood as user comments on the another viewpoint content about the first trending event.

Therefore, the user is facilitated to browse the comments related to the viewpoint in the trending event in time, and it is facilitated to establish a trending topic consumption path of "user browsing a trending event to user watching notable viewpoints to user participating in hot discussion".

In the present disclosure, the electronic device may display the viewpoint content about the first trending event in the first region in various display modes.

Since the first region has limited space, when displaying the viewpoint content about the first trending event, the electronic device may display the viewpoint content about the first trending event in an abbreviated manner if the viewpoint content about the first trending event occupies an area greater than a preset area threshold.

For the above process, reference may be made to the process of displaying the viewpoint content 1 in the abbreviated manner in the region 101 of Figure 1C. Moreover, the preset area threshold is not limited in the present disclosure.

In some embodiments, the electronic device may display the viewpoint content about the first trending event in a form of a card. Therefore, it is beneficial for the card to be automatically attached to a preset position (such as a center position) on the screen of the electronic device in sliding operations, and it is convenient for highlighting the selected card.

For the above process, reference may be made to the viewpoint content 1 in the form of the card in the region 101 shown in Figure 1C, or the viewpoint content 2 in the form of the card in the region 101 shown in Figure 1D.

In some embodiments, the electronic device may further display a first numerical value and a second numerical value in the first region. The first numerical value represents the total number of viewpoint contents about the first trending event that are allowed to be displayed in the first region, such as the total number of viewpoint contents related to the trending event 1 that are allowed to be displayed in the region 101 as shown in Figure 1C or Figure 1D. The second numerical value represents numbering of one viewpoint content about the first trending event being displayed in the first region among all viewpoint contents in the quantity equal to the first numerical value, such as the numbering of the viewpoint content 1 displayed in the region 101 as shown in Figure 1C among the total number, or the numbering of the viewpoint content 2 displayed in the region 101 as shown in Figure 1D among the total number.

In the present disclosure, the electronic device can display the viewpoint content related to the first trending event in the first region. In some embodiments, the electronic device may display a second page of the application in response to receiving a trigger operation on the first region.

The trigger operation on the first region is used to trigger to enter the second page. The second page is another page of the application, and the second page is different from the first page. Moreover, the second page displays viewpoint contents about the first trending event that are allowed to be displayed in the first region. That is, when displaying one of the viewpoint contents related to the first trending event in the second page, the electronic device may display all contents of the viewpoint content. For example, the trigger operation on the first region is the click operation of the user in the region 101 shown in Figure 1C, and the second page is the user interface 14 shown in Figure 1E.

In addition, the second page may further include a control which is used to exit the second page and jump to the first page. For example, the control is the control 204 in the user interface 14 shown in Figure 1E.

In addition, the electronic device may display a page of another application in response to receiving a trigger operation on the second page. The trigger operation on the second page is used to trigger to enter the page of the another application, such as the user operation of clicking the control 205 in the user interface 14 shown in Figure 1E. The implementation of the page of the another application is not limited in the present disclosure. For example, the page of the another application may be a main page of the another application.

In the present disclosure, the electronic device can display the viewpoint content related to the first trending event in the second region. In some embodiments, the electronic device may display a third page of the application in response to receiving a trigger operation on the second region.

The trigger operation on the second region is used to trigger to enter the third page of the application. The third page is different from the first page and the second page. Moreover, the third page displays comment contents about the first trending event that are allowed to be displayed in the second region. That is, when displaying one of the comment contents related to the first trending event in the third page, the electronic device may display all contents of the comment content, such as an ID of the user, specific comments of the user and the number of "likes" to the comment content. For example, the trigger operation on the second region is the click operation of the user in the region 102 shown in Figure 1C, and the third page is the user interface 15 shown in Figure 1F.

In addition, the second region may be used to display a comment content input by a user about the first trending event. In some embodiments, the electronic device allows user input of comment content about the first trending event in the second region and display the comment content of the user about the first trending event in the second region in response to receiving the input operation on the second region.

The input operation on the second region may be understood as an operation in an input box. For example, the input box may be the input box 201 shown in Figure 1C.

In S103, in addition to displaying the comment content about the first trending event, the second region may also be used to display a comment title of the first trending event. A display mode of the comment title and the comment content about the first trending event is not limited in the present disclosure.

In some embodiments, the electronic device may display the comment title of the first trending event at a top position of the second region, and scroll multiple comment contents about the first trending event at remaining positions of the second region except the top position. For the above process, reference may be made to the process of displaying the comment title and the comment content related to the trending event 1 in the region 102 shown in Figure 1C. Therefore, the user is facilitated to quickly obtain the viewpoint contents about the first trending event.

Once the number of comment contents about the first trending event exceeds a preset threshold, the electronic device may cancel the displaying of the comment title of the first trending event at the top position of the second region, and scroll the multiple comment contents about the first trending event from the top position of the second region. The preset threshold may be set based on a size of the second region and an actual situation, and for the above process, reference may be made to the process of displaying the comment contents related to the trending event 1 and not displaying the comment title of the trending event 1 in the region 102 shown in Figure 1D. Therefore, the user is facilitated to view more comment contents about the first trending event.

Based on the above description, a position of the first page is not limited in the present disclosure. After S103, the electronic device may display different contents at different display positions on the first page.

In some embodiments, the electronic device may play another multimedia content of the first trending event in response to receiving a sliding operation on the first page. The sliding operation on the first page is used to trigger to enter another multimedia content of the first trending event, such as, the sliding operation of the user in the user interface 13 shown in Figure 1C. Moreover, another multimedia content of the first trending event is different from the multimedia content of the first trending event in S101. For example, the another multimedia content of the first trending event is the multimedia content 2 of the trending event 1 in the user interface 16 shown in Figure 1G.

In other embodiments, the electronic device may play a multimedia content of a second trending event in response to receiving a sliding operation on the first page. The sliding operation on the first page is used to trigger to enter the multimedia content of the second trending event, such as, the sliding operation of the user in the user interface 13 shown in Figure 1C. Moreover, the second trending event is different from the first trending event. For example, the multimedia content of the second trending event is the multimedia content 3 of the trending event 2 in the user interface 17 shown in Figure 1H.

As an example, an electronic device is provided according to the present disclosure. The electronic device includes: one or more processors; a memory; and one or more computer programs. The one or more computer programs are stored in the memory, and the one or more computer programs, when executed by the one or more processors, cause the electronic device to implement the method for displaying the trending event in the application according to the previous embodiments.

As an example, a chip system is provided according to the present disclosure, which is applied to an electronic device including a memory and a sensor. The chip system includes a processor. The processor is configured to perform the method for displaying the trending event in the application according to the previous embodiments.

As an example, a computer readable storage medium having a computer program stored thereon is provided according to the present disclosure. The computer program, when executed by a processor, causes an electronic device to implement the method for displaying the trending event in the application according to the previous embodiments.

As an example, a computer program product is provided according to the present disclosure. The computer program product, when executed on a computer, causes the computer to perform the method for displaying the trending event in the application according to the previous embodiments.

All or some of functions in the embodiments may be implemented by software, hardware, or a combination of software and hardware. When the functions are implemented by using software, all or some of the functions may be implemented in a form of a computer program product. The computer program product includes one or more computer instructions. When the computer program instructions are loaded and executed on a computer, all or some of the processes or functions according to the embodiments of the present disclosure are produced. The computer may be a general-purpose computer, a special-purpose computer, a computer network, or another programmable apparatus. The computer instructions may be stored in a computer readable storage medium. The computer readable storage medium may be any available medium capable of being accessed by a computer or include one or more data storage devices integrated by an available medium, such as a server and a data center. The available medium may be a magnetic medium (for example, a floppy disk, a hard disk, or a magnetic tape), an optical medium (for example, a DVD), a semiconductor medium (for example, a solid state disk (SSD)), or the like.

It should be noted that in the present disclosure, relational terms such as "first" and "second" are only used to distinguish one entity or operation from another entity or operation, but do not indicate or imply an actual relationship or order of these entities or operations. In addition, terms of "include", "comprise" or any other variants are intended to be non-exclusive. Therefore, a process, method, article or device including multiple elements includes not only the elements but also other elements that are not enumerated, or also includes the elements inherent for the process, method, article or device. Unless expressively limited otherwise, an element defined by a statement of "including one..." does not exclude a case that other similar elements exist in the process, method, article or device including the element.

The above are only specific implementations of the present disclosure, so that those skilled in the art can understand or implement the present disclosure. Numerous modifications to the embodiments are apparent to those skilled in the art, and the general principles defined herein may be implemented in other embodiments without departing from the spirit or scope of the present disclosure. Therefore, the present disclosure is not limited to the embodiments illustrated herein, but should be defined by the broadest scope consistent with the principle and novel features disclosed herein.

## Claims

1. A method for displaying a trending event in an application, comprising:
playing a multimedia content of a first trending event in the application;
receiving a sliding operation performed for the multimedia content; and
in response to the sliding operation, displaying a viewpoint content about the first trending event in a first region of a first page, and scrolling comment contents about the first trending event in a second region of the first page, wherein the first page is a page of the application, and the first region is different from the second region.

2. The method according to claim 1, further comprising:
in response to receiving a sliding operation on the first region or in response to passing a preset time period, switching, in the first region, from displaying one viewpoint content about the first trending event to displaying another viewpoint content about the first trending event.

3. The method according to claim 1 or 2, wherein the displaying the viewpoint content about the first trending event comprises:
displaying the viewpoint content about the first trending event in a form of a card.

4. The method according to claim 1 or 2, further comprising:
displaying a first numerical value and a second numerical value in the first region, wherein the first numerical value represents a total number of viewpoint contents about the first trending event that are allowed to be displayed in the first region, and the second numerical value represents a numbering of the viewpoint content about the first trending event being displayed in the first region among the viewpoint contents in quantity equal to the first numerical value.

5. The method according to claim 1 or 2, wherein the viewpoint content about the trending event is obtained from another application associated with the application.

6. The method according to claim 5, further comprising:
displaying a second page of the application in response to receiving a trigger operation on the first region, wherein the second page is used to display all viewpoint contents about the first trending event that are allowed to be displayed in the first region.

7. The method according to claim 1 or 2, wherein the viewpoint content about the trending event is displayed in form of text and/or pictures

8. The method according to claim 7, wherein the displaying the viewpoint content about the first trending event comprises:
displaying part of the text of the viewpoint content about the first trending event; or
displaying the text of the viewpoint content about the first trending event; or
displaying part of the pictures of the viewpoint content about the first trending event; or
displaying the pictures of the viewpoint content about the first trending event; or
displaying part of the text and part of the pictures of the viewpoint content about the first trending event; or
displaying part of the text and the pictures of the viewpoint content about the first trending event; or
displaying the text and part of the pictures of the viewpoint content about the first trending event; or
displaying the text and the pictures of the viewpoint content about the first trending event.

9. The method according to claim 1 or 2, further comprising:
displaying a third page of the application in response to receiving a trigger operation on the second region, wherein the third page displays comment contents about the first trending event that are allowed to be displayed in the second region.

10. The method according to claim 1 or 2, further comprising:
in response to receiving an input operation on the second region, inputting and displaying a comment content of a user about the first trending event in the second region.

11. The method according to claim 1 or 2, wherein the scrolling the comment contents about the first trending event in the second region comprises:
displaying a comment title of the first trending event at a top position of the second region, and scrolling a plurality of comment contents about the first trending event from another position of the second region except the top position ,

12. The method according to claim 11, wherein in response to determining the number of comment contents about the first trending event exceeds a preset threshold, the method further comprises:
cancelling the displaying of the comment title of the first trending event at the top position of the second region, and scrolling the plurality of comment contents about the first trending event from the top position of the second region.

13. The method according to claim 1 or 2, wherein the scrolling the comment contents about the first trending event in the second region of the first page comprises:
when displaying one viewpoint content about the first trending event in the first region, scrolling, in the second region of the first page, the comment contents about the first trending event related to the one viewpoint content about the first trending event.

14. The method according to claim 1 or 2, further comprising:
playing another multimedia content of the first trending event or playing a multimedia content of a second trending event in response to receiving a sliding operation on the first page.

15. An electronic device, comprising:
one or more processors;
a memory; and
one or more computer programs;
wherein the one or more computer programs are stored in the memory, and the one or more computer programs, when executed by the one or more processors, cause the electronic device to implement the method for displaying the trending event in the application according to any one of claims 1 to 14.

16. A computer storage medium storing computer instructions, wherein the computer instructions, when executed on an electronic device, cause the electronic device to perform the method for displaying the trending event in the application according to any one of claims 1 to 14.

17. A computer program product that, when executed on a computer, causes the computer to perform the method for displaying the trending event in the application according to any one of claims 1 to 14.
